# EUROPEAN PATENT SPECIFICATION

(11) **EP 1 084 969 B1**
(45) Date of publication and mention of the grant of the patent: **21.06.2006**
(21) Application number: 00120802.4
(22) Date of filing: 07.05.1998
(51) Int. Cl.: B65G 47/82

(54) **Lehr loader with air cooled pusher bar support**
Ofenbeschicker mit einem luftgekühlten Träger für eine Stösselanordnung
Chargeur de four comportant un support d'élément poussoir refroidi par air

(30) Priority: 08.05.1997 US 854042; 16.09.1997 US 931720
(43) Date of publication of application: 21.03.2001
(62) Divisional of application: 98108288.6
(73) Proprietor: OWENS-BROCKWAY GLASS CONTAINER INC., Toledo, Ohio 43666 (US)
(72) Inventor: DiFrank, Frank J., Toledo, OH 43606 (US)
(74) Representative: Blumbach - Zinngrebe

(56) References cited:
- US-A- 5 527 372

## Description

### FIELD OF THE INVENTION

This invention relates to a lehr loader for transferring freshly formed glass containers at elevated temperature into an annealing lehr, comprising a support bar for mounting a pusher bar.

### DESCRIPTION OF THE PRIOR ART

A pusher mechanism is disclosed in US-A 5,527,372 for pushing glass containers from a dead plate to a transversely moving conveyor. The pusher in a united support bar and pusher bar assembly and comprises a lengthy side wall and a number of finger walls defining pockets for receiving each a glass container. The side and finger walls include air passages for producing each an air jet in each pocket to hold the respective container in the pocket. Whereas air flowing through the passages will cool the side and finger walls, the containers are subjected to a cooling effect which may be too strong. Furthermore, the pusher has to be changed when the container type is changed. Therefore, a corresponding number of pushers must be hold out which is costly.

Other lehr loaders are described in US-A-3,184,031, US-A-4,067,434, US-A-5,044,488 and US-A-5, 472, 077. These lehr loaders comprise a separate pusher bar and support bar.

The pusher bar support of such a lehr loader is quite long and is subject to a high temperature environment due to its proximity to freshly formed glass containers, which still retain a high degree of the heat required for their molding from gobs of molten glass, and to its proximity to the inlet end of an annealing lehr, which must be operated at an elevated temperature to properly anneal the containers. For example, the typical lehr loader pusher bar support operates in an environment where the temperature often reaches at least 200°C (400° F.), and in some instances up to approximately 540°C (1000° F.). If the pusher bar support is not continuously cooled during its operation, it is subject to warpage or other forms of thermal distortion.

### BRIEF DESCRITPION OF THE INVENTION

Accordingly, it is an object of the present invention to provide a lehr loader with an improved pusher bar support. More particularly, it is an object of the present invention to provide a lehr loader with a pusher bar support that is resistant to warpage and other forms of thermal distortion while operating in a high temperature environment.

The aforesaid and other problems associated with prior art lehr loader devices are overcome by a lehr loader according to claim 1 and a method according to claim 6.

In a preferred embodiment of the lehr loader, a structural member is used for the pusher bar support which is surrounded by thin metallic skins spaced from the structural member, and from each other in the case of a pusher bar support using more than one of such skins, and by causing pressurized cooling air to flow in the spaces between the structural member and the surrounding metallic skin (s) .

For a further understanding of the present invention and the objects thereof, attention is directed to the figures and the follow brief description thereof, to the detailed description of the preferred embodiment of the invention and to the appended claims.

### BRIEF DESCRIPTION OF THE FIGURES

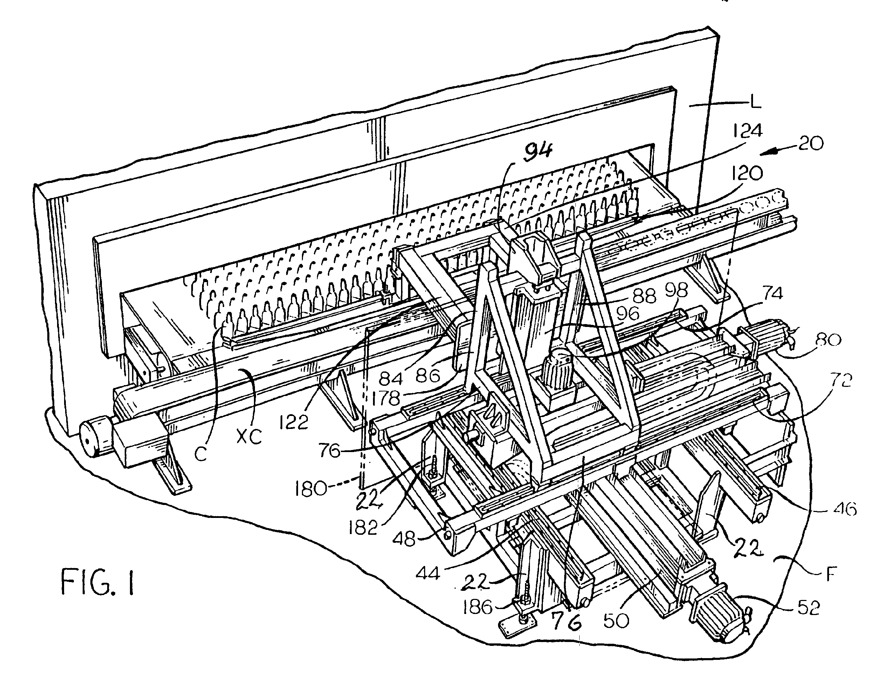

- FIG. 1: is a fragmentary, perspective view of a lehr loader,
- FIG. 2: is a front elevational view, at an enlarged scale, of a portion of the lehr loader,
- FIG. 3: is a side elevational view, at an enlarged scale, of a portion of the lehr loader, and
- Fig. 4: is a vertical sectional view, partly schematic, of a pusher bar support.

### DETAILED DESCRIPTION OF THE PREFERRED EMBODIMENT

A lehr loader is generally indicated in the drawing by reference numeral 20. A frame 22 supported on a floor F is provided with a spaced apart pair of longitudinally extending slides 44, 46, and a generally rectangular carriage 48 is slidably mounted on the slides 44, 46. The carriage 48 is caused to reciprocate on the frame 22, toward and away from an annealing lehr L or other processing unit, by a reversible linear actuator 50 that is driven by a reversible a.c. servo motor 52 mounted in alignment with the actuator 50.

The carriage 48 is provided with a spaced apart pair of laterally extending slides 72, 74 and a carriage 76 is slidably mounted on the slides 72, 74. The carriage 76 reciprocates in a longitudinal direction with the carriage 48 and is caused to reciprocate in a lateral direction with respect to the carriage 48, from side to side of the annealing lehr L, by a reversible linear actuator that is driven by a reversible a.c. servo motor 80. The linear actuator preferably is an enclosed ball screw mechanism that reciprocates and transmits reciprocating force to a spaced apart location of the carriage 76.

The carriage 76 has a vertically extending portion 86 that is made up of a frame with a pair of spaced apart vertically extending members 84, 88, and the vertically extending members 86, 88 are provided with vertically extending slides. A vertically extending carriage 94 is slidably mounted on the slides of the carriage 76 to be movable in a vertical plane with respect to the carriage 76 as the carriage 76 is movable laterally in a horizontal plane with respect to the carriage 48 and as the carriage 76 is movable longitudinally in a horizontal plane with the carriage 48. The carriage 94 is caused to reciprocate in a vertical plane, by a reversible linear actuator 96 that is driven by a reversible a.c. servo motor 98.

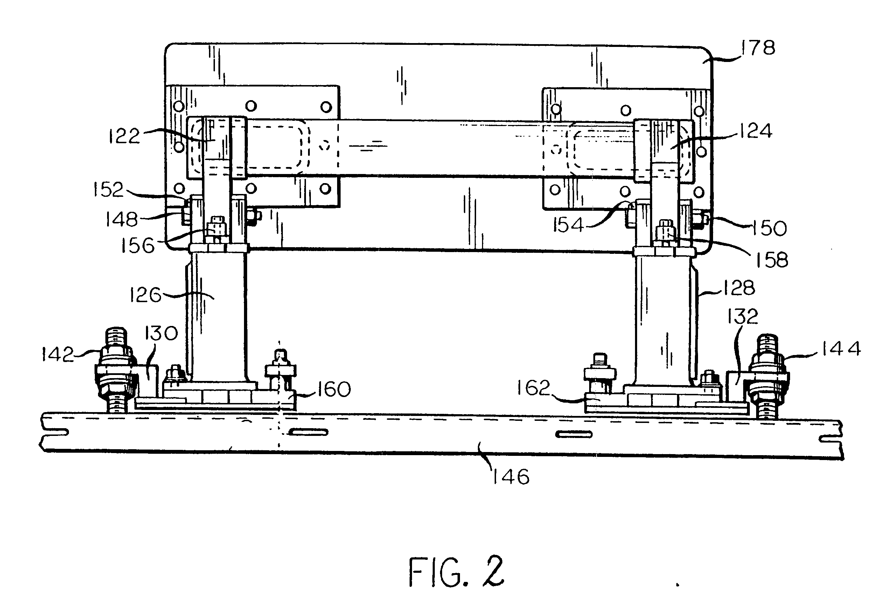

The carriage 94 has a laterally extending pusher bar 120 attached thereto, a pair of spaced apart, longitudinally extending beams 122, 124 with beams 126, 128 (Fig. 2) extending downwardly therefrom, respectively, being provided to properly position the pusher bar 120 with respect to the lehr L for the intended operation of the pusher bar 120.

The cycle of operation of the lehr loader 20 begins with the carriage 48 retracted as far as possible from the lehr L, the carriage 76 positioned as far to the left as possible, and with the carriage 94 in its lowermost position. Freshly formed glass containers C are presented in a linear array between the lehr loader 20 and the lehr L on and by way of an endless cross-conveyor XC. A row of containers C on the cross-conveyor XC is then advanced from the cross-conveyor XC by advancing the carriage 48 toward the lehr L. During the advance of containers C to the lehr L, it is necessary to translate the carriage 76 to the right, to keep incoming containers C on the cross-conveyor XC from colliding with the pusher bar 120. At the conclusion of the advance of a line of containers C into the lehr L, the pusher bar 120 is raised above the tops of incoming containers C on the cross-conveyor XC by raising the carriage 94, and with cycles that at least partly overlap the raising of the carriage 94, the carriage 48 is retracted away from the lehr L to its start position, and the carriage 76 is retracted to the left to its start position and, after the pusher bar 120 is retracted past the tops of the incoming containers C on the cross-conveyor XC, the carriage 94 is lowered to its start position.

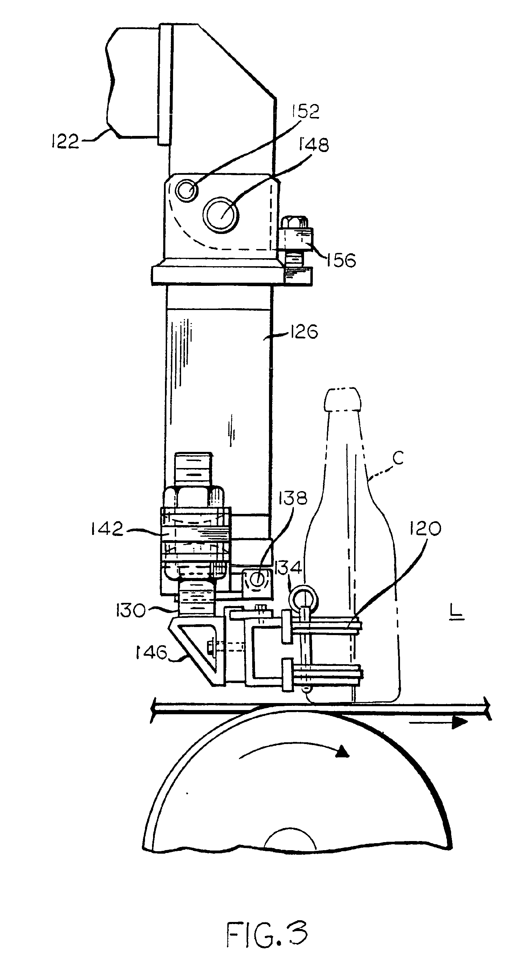

The pusher bar 120 is connected to a laterally extending support bar 146 (FIG. 3), and the support bar 146 is connected to extensions 130, 132 of the downwardly extending beams 126, 128, respectively, by like removable pins 134, 136, respectively. The purpose of the removable connection of the pusher bar 120 to the support bar 146 is to permit rapid changing of a pusher bar 120, for example, due to a change in the diameter of the containers C being processed by the lehr loader 20. In that regard, the pusher bar 120 preferably is provided with a container engaging face with a plurality of spaced apart container engaging recesses, preferable defined by a plurality of spaced apart equilateral triangularly shaped attachments secured to the front face of the pusher bar 120, the recesses being sized and spaced in a manner designed for the processing of containers C of a given diameter. Thus, upon a change of the diameter in the containers C being processed by the lehr loader 20, it is important to be able to rapidly change the pusher bar 120 to one whose container engaging face is provided with recesses that are sized and spaced apart differently, and the connection of the pusher bar 120 to the support bar 146, as described, permits such a rapid change in the pusher bar 120.

The extensions 130, 132 are pivotally connected to the downwardly extended beams 126, 128, respectively, about axes 138, 140, respectively. Threaded adjusters 142, 144, respectively, are provided to permit adjustment of the angle of the pusher bar 120 with respect to containers C that it engages, preferably so that the pusher bar 120 engages the bottom portion of each container C slightly before it engages a higher portion of such container C to impart a slight tilt to the container C away from its direction of motion into the lehr L as shown in FIG. 3.

The downwardly extending beams 126, 128 are pivotally connected to the longitudinally extending beams 122, 124, respectively, about axes 148, 150, respectively. In normal operation of the lehr loader 20, pivoting of the beams 126, 128 with respect to the beams 122, 124 about the axes 148, 150, respectively, is resisted by shear pins 152, 154, respectively, so that no such pivoting motion will occur. However, in the event of a blockage of the transfer of containers C into the lehr L, the shear pins 152, 154 will fail due to, the increased load on the pusher bar 120, and the downwardly extending beams 126, 128 will thereupon rotate through a limited arc with respect to the beams 122, 124, respectively, to thereby retract the pusher bar 120 from engagement with containers C. To permit adjustment in the included angle normally existing between the downwardly extending beams 126, 128 with respect to the longitudinally extending beams 122, 124, respectively, adjustable stops 156, 158 carried by the beams 122, 124, respectively, are provided to assist in properly positioning the pusher bar 120 with respect to the containers C to be engaged thereby.

To permit adjustment in the position of the support bar 146 and the pusher bar 120 with respect to the downwardly extending beams 126, 128, and thereby with respect to containers C to be engaged by the pusher bar 120, the extensions 130, 132 are connected to the beams 126, 128 by plate assemblies 160, 162, respectively.

To shield the linear actuator 96 from thermal radiation from the lehr L and the containers C being processed by the lehr loader 20, a radiation baffle 178 is secured to the carriage 94, preferably to the vertically extending portion of the carriage, preferably to the members 86, 88 thereof. Further, to protect many other portions of the lehr loader 20 from thermal radiation from the lehr L and the containers C, a fixed baffle 180 is positioned between the cross-conveyor XC and the portions of the lehr loader 20 beneath and to the rear of the longitudinally extending beams 122, 124 of the carriage 94.

The horizontally acting servo motors 52, 80 are capable of delivering high levels of torque during rapid acceleration of the carriages 48, 76, respectively, and are capable of braking quite rapidly during the rapid deceleration of such carriages. The loads resulting from such rapid acceleration and deceleration are quite substantial, and would tend to vibrate the legs of the frame 22 from their desired positions with respect to the lehr L unless properly compensated for in the installation of the frame 22. To effect such proper compensation, the legs of the frame 22. are mounted on the threaded members 182, 186, respectively. Members 182, 186, in turn, are securely anchored in the floor F of the glass container manufacturing plant where the lehr loader 20 is installed.

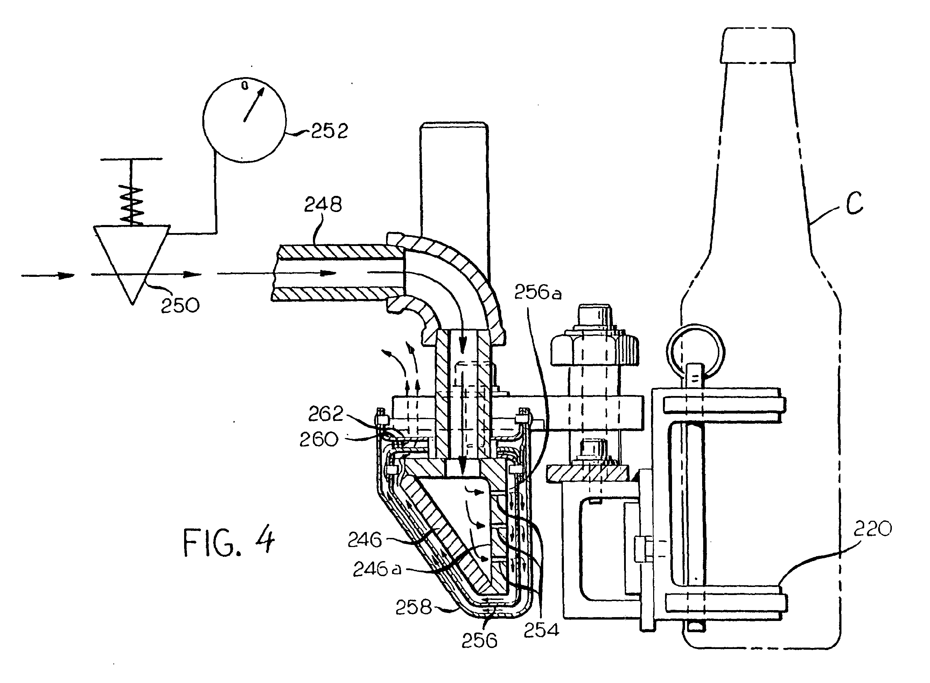

Details of the support bar 146 are illustrated with a support bar 246 in Fig. 4. The support bar 246 is used to support a pusher bar 220 that performs the functions attributed to the pusher bar 120. In a typical lehr loader for an annealing lehr that is used to anneal freshly formed glass containers, the support bar 246, which inherently must be quite large in its lateral extent, is subjected to elevated temperatures because of its proximity to an open entrance to a relatively high temperature annealing lehr, and/or to freshly formed containers that still retain significant levels of latent heat from their formation. For example, the glass containers passing through a lehr loader on their way to an annealing lehr are typically at temperatures of at least 540° C (1000° F). In such an environment, the support bar 246, if it is not continuously cooled during its operation, can easily reach a temperature of approximately 200° C (400° F), and in some instances temperatures of up to approximately 540° C (1000° F). An uncooled support bar for a glass container annealing lehr, then, is subject to a considerable degree of dimensional distortion in operation do in part to the temperature levels it is capable of reaching and in part to its substantial lateral extent.

To avoid dimensional distortion in operation, the support bar 246 is continuously cooled by causing compressed air or other fluid coolant to flow therethrough from an inlet line 248, which receives a clean, dry air supply through a solenoid 250 at a pressure that is regulated by a gauge 252. Cooling air from the inlet line 248 flows into the support bar 246, which is annular in cross section, and flows outwardly from the support bar 246 through a plurality of apertures 254 in a generally vertically extending front face 246a of the support bar 246. The cooling effect of the cooling air flowing through the support bar 246 is adiabatically augmented as its pressure drops based on Boyle's law, in which the ratio of the product of inlet pressure and inlet volume to inlet temperature is the same as the ratio of the product of outlet pressure and outlet volume to outlet temperature.

The cooling of the support bar 246 is further augmented by surrounding it with one or more radiation shields, shown as a pair of radiation shields 256, 258. The innermost radiation shield 256 is spaced from the exterior of the support bar 246, preferably by a distance of approximately 3.175 mm (1/8 inch), to prevent conductive heat transfer therebetween. Likewise, the outermost radiation shield 258 is spaced from the innermost radiation shield 256, again, preferably, by a distance of approximately 3.175 mm (1/8 inch), to prevent conductive heat transfer therebetween.

The cooling air passing through the apertures 254 in the support bar 246 passes into the space between the support bar 246 and the radiation shield 256 and, through apertures 256a in the radiation shield 256, part of such cooling air passes into the space between the radiation shield 256 and the radiation shield 258. Such streams of cooling air then flow, in parallel, around the support bar 246 to exhaust openings 260, 262, respectively, where the spent cooling air, which preferably is at a temperature of no more than 120° C (250° F), is exhausted to atmosphere. Preferably, the exhaust openings 260, 262, as shown, are directed away from incoming freshly formed glass containers to avoid subjecting such containers to an unwanted cooling effect.

Although the best mode contemplated by the inventor for carrying out the present invention as of the filing date hereof has been shown and described herein, it will be apparent to those skilled in the art that suitable modifications, variations and equivalents may be made without departing from the scope of the invention as defined in the appended claims.

## Claims

1. A lehr loader (20) for transferring freshly formed glass containers (C) at elevated temperatures into an annealing lehr (L), comprising:
a support bar (146, 246) for mounting a pusher bar (120, 220), **characterized in that** the support bar 246) is in the shape of an elongate member which is annular in cross section and has a generally vertically extending front face (246a) with a spaced apart plurality of apertures (254) in said front face (246a); and
means (248) for introducing a stream of cooling air or other fluid coolant into said support bar (246) to flow through said support bar (246) and out of said plurality of apertures (254).

2. The lehr loader (20) according to claim 1 wherein the support bar (246) further comprises:
a first thin metallic radiation shield (256) surrounding said support bar (246) and spaced from said support bar (246) to retard conductive heat transfer between said support bar (246) and said first radiation shield (256), at least a part of the cooling air flowing from said plurality of apertures (254) in a space between said first radiation shield (256) and said support bar (246) to an outlet (260) from the space.

3. The lehr loader (20) according to claim 2
wherein the outlet (260) from the space is directed away from freshly formed glass containers (C) entering the lehr loader (20) to avoid subjecting the freshly formed glass containers (C) to an unwanted cooling effect.

4. The lehr loader (20) according to claim 2 wherein the support bar (246) further comprises:
a second thin metallic radiation shield (258) surrounding said first radiation shield (256) and spaced from said first radiation shield (256), said first radiation shield (256) having aperture means (256a) therein to permit at least another part of cooling air flowing from said plurality of apertures (254) to flow through a second space between said second radiation shield (258) and said first radiation shield (256) to an outlet (262) from the second space.

5. The lehr loader (20) according to claim 4
wherein the outlet (262) from the second space is directed away from freshly formed glass containers (C) entering the lehr loader (20) to avoid subjecting the freshly formed glass containers (C) to an unwanted cooling effect.

6. The method of cooling an elongate support bar (246) which mounts a pusher bar (220) of a lehr loader (20) for transferring freshly formed glass containers (C) at elevated temperatures into an annealing lehr (L), the support bar (246) being annular in cross section and having a generally vertically extending front face (246a) with a plurality of apertures (254) therein, said method comprising:
introducing a stream of cooling air or other fluid coolant into said support bar (246) to flow therethrough and out of the support bar (246) through the plurality of apertures (254).

7. The method according to claim 6 wherein the support bar (246) comprises:
a thin metallic radiation shield (256) surrounding and spaced from said support bar (246);
said method further comprising:
causing at least a portion of the cooling air or fluid coulant flowing from the plurality of apertures (254) of the support bar (246) to flow around the support bar (246) in the space between the support bar (246) and the radiation shield (256) to an outlet (260) from the space.

8. The method according to claim 7 wherein the support bar (246) further comprises:
a second outer thin metallic radiation shield (258) surrounding and spaced from the first, inner radiation shield (256);
said method further comprising:
causing at least another portion of the cooling air or other fluid coolant flowing from the plurality of apertures (254) of the support bar (246) to flow around the first, inner radiation shield (256) in a second, outer space between the first, inner radiation shield (256) and the second, outer radiation shield (258) to an outlet (262) from the second, outer space between the first radiation shield (256) and the second radiation shield (260).

## Patentansprüche

1. Kühlofen-Beschickungsvorrichtung (20) zum Befördern frisch geformter Glasbehälter (C), die erhöhte Temperaturen aufweisen, in einen Vergütungskühlofen (L) hinein, umfassend:
eine Haltestange (146, 246) zur Montage einer Schubstange (120, 220),
**dadurch gekennzeichnet, dass**
die Haltestange (146, 246) in Gestalt eines länglichen Elements vorgesehen ist, welches einen ringförmigen Querschnitt aufweist und eine sich allgemein vertikal erstreckende Frontfläche (246a) aufweist, wobei in der Frontfläche (246a) eine Mehrzahl beabstandeter Öffnungen (254) vorgesehen ist; und
Mittel (248) vorgesehen sind, um eine Strömung mit kühlender Luft oder einem anderem fluiden Kühlmittel in die Haltestange (246) einzuleiten, damit diese(s) durch die Haltestange (246) hindurch und aus der Mehrzahl von Öffnungen (254) heraus strömt.

2. Kühlofen-Beschickungsvorrichtung (20) nach Anspruch 1, wobei die Haltestange (246) ferner umfasst:
eine erste dünne, metallische Strahlungsabschirmung (256), welche die Haltestange (246) umschließt und im Abstand zu der Haltestange (246) angeordnet ist, um einen konduktiven Wärmetransport zwischen der Haltestange (246) und der ersten Strahlungsabschirmung (256) zu verzögern, wobei zumindest ein Teil der Kühlluft von der Mehrzahl von Öffnungen (254) in einem Zwischenraum zwischen der ersten Strahlungsabschirmung (256) und der Haltestange (246) hindurch zu einem Auslass (260) aus dem Zwischenraum strömt.

3. Kühlofen-Beschickungsvorrichtung (20) nach Anspruch 2, wobei der Auslass (260) aus dem Zwischenraum von den in die Kühlofen-Beschickungsvorrichtung (20) einlaufenden, frisch geformten Glasbehältern (C) weg gerichtet ist, um zu verhindern, dass die frisch geformten Glasbehälter (C) einem ungewollten Kühlungseffekt ausgesetzt werden.

4. Kühlofen-Beschickungsvorrichtung (20) nach Anspruch 2, wobei die Haltestange (246) ferner umfasst:
eine zweite dünne, metallische Strahlungsabschirmung (258), welche die erste Strahlungsabschirmung (256) umschließt und im Abstand von der ersten Strahlungsabschirmung (256) angeordnet ist, wobei in der ersten Strahlungsabschirmung (256) Öffnungsmittel (256a) vorgesehen sind, um zu gestatten, dass zumindest ein weiterer Teil der aus der Mehrzahl von Öffnungen (254) ausströmenden Kühlluft durch einen zweiten Zwischenraum zwischen der zweiten Strahlungsabschirmung (258) und der ersten Strahlungsabschirmung (256) hindurch zu einem Auslass (262) aus dem zweiten Zwischenraum strömt.

5. Kühlofen-Beschickungsvorrichtung (20) nach Anspruch 4, wobei der Auslass (262) aus dem zweiten Zwischenraum von den in die Kühlofen-Beschickungsvorrichtung (20) einlaufenden, frisch geformten Glasbehältern (C) weg gerichtet ist, um zu verhindern, dass die frisch geformten Glasbehälter (C) einem ungewollten Kühlungseffekt ausgesetzt werden.

6. Verfahren zum Kühlen einer länglichen Haltestange (246), an welcher eine Schubstange (220) einer Kühlofen-Beschickungsvorrichtung (20) zum Befördern frisch geformter Glasbehälter (C) mit erhöhten Temperaturen in einen Vergütungskühlofen (L) hinein montiert wird, wobei die Haltestange (246) im Querschnitt ringförmig ist und eine sich allgemein vertikal erstreckende Frontfläche (246a) mit einer Mehrzahl von in dieser vorgesehenen Öffnungen (254) aufweist, wobei das Verfahren umfasst:
Einleiten einer Strömung von Kühlluft oder eines anderen fluiden Kühlmittels in die Haltestange (246), so dass sie durch diese hindurch und durch die Mehrzahl von Öffnungen (254) aus der Haltestange (246) heraus strömt.

7. Verfahren nach Anspruch 6, wobei die Haltestange (246) umfasst:
eine dünne, metallische Strahlungsabschirmung (256), welche die Haltestange (246) umschließt und im Abstand zu dieser angeordnet ist,
wobei das Verfahren ferner umfasst:
Bewirken, dass zumindest ein Teil der Kühlluft oder des anderen fluiden Kühlmittels aus der Mehrzahl der Öffnungen (254) der Haltestange (246) in dem Zwischenraum zwischen der Haltestange (246) und der Strahlungsabschirmung (256) um die Haltestange (246) herum zu einem Auslass (260) aus dem Zwischenraum strömt.

8. Verfahren nach Anspruch 7, wobei die Haltestange (246) ferner umfasst:
eine zweite, äußere, dünne, metallische Strahlungsabschirmung (258), welche die erste, innere Strahlungsabschirmung (256) umschließt und im Abstand zu dieser angeordnet ist,
wobei das Verfahren ferner umfasst:
Bewirken, dass zumindest ein weiterer Teil der Kühlluft oder des anderen fluiden Kühlmittels aus der Mehrzahl der Öffnungen (254) der Haltestange (246) um die erste, innere Strahlungsabschirmung (256) herum in einem zweiten, äußeren Zwischenraum zwischen der ersten, inneren Strahlungsabschirmung (246) und der zweiten, äußeren Strahlungsabschirmung (258) zu einem Auslass (262) aus dem zweiten, äußeren Zwischenraum zwischen der ersten Strahlungsabschirmung (256) und der zweiten Strahlungsabschirmung (258) strömt.

## Revendications

1. Chargeur de tunnel de recuisson (20) pour transférer des récipients en verre fraîchement formés (C) à des températures élevées dans un tunnel de recuisson (L), comprenant :
une barre de support (146, 246) pour monter une barre de pousseur (120, 220), **caractérisé en ce que** :
la barre de support (146, 246) se présente sous la forme d'un élément allongé qui a une section transversale annulaire et qui comporte une face avant s'étendant globalement verticalement (246a) avec une pluralité d'ouvertures mutuellement espacées (254) dans ladite face avant (246a) ; et
des moyens (248) pour introduire un courant d'air de refroidissement ou d'un autre agent de refroidissement fluide dans ladite barre de support (246) pour qu'il s'écoule à travers ladite barre de support (246) et hors de ladite pluralité d'ouvertures (254).

2. Chargeur de tunnel de recuisson (20) selon la revendication 1, dans lequel la barre de support (246) comprend de plus :
un premier blindage de rayonnement métallique mince (256) entourant ladite barre de support (246) et espacé de ladite barre de support (246) pour retarder le transfert de chaleur de conduction entre ladite barre de support (246) et ledit premier blindage de rayonnement (256), au moins une partie de l'air de refroidissement s'écoulant de ladite pluralité d'ouvertures (254) dans un espace entre ledit premier blindage de rayonnement (256) et ladite barre de support (246) à un orifice de sortie (260) depuis l'espace.

3. Chargeur de tunnel de recuisson (20) selon la revendication 2,
dans lequel l'orifice de sortie (260) depuis l'espace est dirigé de façon à s'éloigner des récipients en verre fraîchement formés (C) entrant dans le chargeur de tunnel de recuisson (20) afin d'éviter de soumettre les récipients en verre fraîchement formés (C) à un effet de refroidissement indésirable.

4. Chargeur de tunnel de recuisson (20) selon la revendication 2, dans lequel la barre de support (246) comprend de plus :
un deuxième blindage de rayonnement métallique mince (258) entourant ledit premier blindage de rayonnement (256) et espacé dudit premier blindage de rayonnement (256), ledit premier blindage de rayonnement (256) comportant des moyens formant ouverture (256a) à l'intérieur de celui-ci afin de permettre à au moins une autre partie de l'air de refroidissement s'écoulant à partir de ladite pluralité d'ouvertures (254) de s'écouler à travers un deuxième espace entre ledit deuxième blindage de rayonnement (258) et ledit premier blindage de rayonnement (256) vers un orifice de sortie (262) depuis le deuxième espace.

5. Chargeur de tunnel de recuisson (20) selon la revendication 4,
dans lequel l'orifice de sortie (262) depuis le deuxième espace est dirigé de façon à s'éloigner des récipients en verre fraîchement formés (C) entrant dans le chargeur de tunnel de recuisson (20) de façon à éviter de soumettre les récipients en verre fraîchement formés (C) à un effet de refroidissement indésirable.

6. Procédé de refroidissement d'une barre de support allongée (246) qui supporte une barre de pousseur (220) d'un chargeur de tunnel de recuisson (20) pour transférer des récipients en verre fraîchement formés (C) à des températures élevées dans un tunnel de recuisson (L), la barre de support (246) ayant une section transversale annulaire et comportant une face avant s'étendant globalement verticalement (246a) avec une pluralité d'ouvertures (254) à l'intérieur de celle-ci, ledit procédé comprenant :
l'introduction d'un courant d'air de refroidissement ou d'un autre agent de refroidissement fluide dans ladite barre de support (246) de façon à ce qu'il s'écoule à l'intérieur de celle-ci et hors de la barre de support (246) à travers la pluralité d'ouvertures (254).

7. Procédé selon la revendication 6, dans lequel la barre de support (246) comprend :
un blindage de rayonnement métallique mince (256) entourant ladite barre de support (246) et espacé de celle-ci ;
ledit procédé comprenant de plus :
le fait de faire s'écouler au moins une partie de l'air de refroidissement ou d'un autre agent de refroidissement fluide s'écoulant à partir de la pluralité d'ouvertures (254) de la barre de support (246) autour de la barre de support (246) dans l'espace entre la barre de support (246) et le blindage de rayonnement (258) vers un orifice de sortie (260) depuis l'espace.

8. Procédé selon la revendication 7, dans lequel la barre de support (246) comprend de plus :
un deuxième blindage de rayonnement métallique mince extérieur (258) entourant le premier blindage de rayonnement intérieur (256) et espacé de celui-ci ;
ledit procédé comprenant de plus :
le fait de faire s'écouler au moins une autre partie de l'air de refroidissement ou d'un autre agent de refroidissement fluide s'écoulant à partir de la pluralité d'ouvertures (254) de la barre de support (246) autour du premier blindage de rayonnement intérieur (256) dans un deuxième espace extérieur entre le premier blindage de rayonnement intérieur (256) et le deuxième blindage de rayonnement extérieur (258) vers un orifice de sortie (262) depuis le deuxième espace extérieur entre le premier blindage de rayonnement (256) et le deuxième blindage de rayonnement (250).
